# EUROPÄISCHE PATENTSCHRIFT

(11) **EP 0 781 860 B1**
(45) Veröffentlichungstag und Bekanntmachung des Hinweises auf die Patenterteilung: **22.09.1999**
(21) Anmeldenummer: 96810886.0
(22) Anmeldetag: 20.12.1996
(51) Int. Cl.: C23C 22/68, C23C 8/16

(54) **Verfahren zur Oberflächenbehandlung von Aluminium und Aluminiumlegierungen**
Surface treatment process for aluminium and aluminium alloys
Procédé de traitement de surfaces en aluminium ou alliages d'aluminium

(30) Priorität: 23.12.1995 DE 19548740
(43) Veröffentlichungstag der Anmeldung: 02.07.1997
(73) Patentinhaber: ABB RESEARCH LTD., 8050 Zürich (CH)
(72) Erfinder: Förster, Stefan, Dr., 8152 Opfikon (CH)
(74) Vertreter: Pöpper, Evamaria, Dr.

(56) Entgegenhaltungen:
- DE-A- 2 350 360
- DE-A- 4 303 339
- DE-C- 965 715
- FR-A- 1 138 085
- US-A- 3 247 026
- US-A- 3 687 882
- PATENT ABSTRACTS OF JAPAN vol. 008, no. 067 (C-216), 29.März 1984 & JP 58 217679 A (TATEYAMA ARUMINIUMU KOGYO KK), 17.Dezember 1983,
- PATENT ABSTRACTS OF JAPAN vol. 014, no. 304 (C-0734), 29.Juni 1990 & JP 02 099172 A (MITSUBISHI HEAVY IND LTD), 11.April 1990,
- PATENT ABSTRACTS OF JAPAN vol. 013, no. 061 (C-567), 10.Februar 1989 & JP 63 250470 A (MITSUBISHI ALUM CO LTD), 18.Oktober 1988,
- PATENT ABSTRACTS OF JAPAN vol. 095, no. 002, 31.März 1995 & JP 06 322513 A (MITSUBISHI MATERIALS CORP), 22.November 1994,
- PATENT ABSTRACTS OF JAPAN vol. 018, no. 430 (C-1236), 11.August 1994 & JP 06 128753 A (MITSUBISHI ALUM CO LTD;OTHERS: 01), 10.Mai 1994,

## Beschreibung

### Technisches Gebiet

Die Erfindung bezieht sich auf das Gebiet der Werkstofftechnik. Sie betrifft ein Verfahren zur Oberflächenbehandlung von Aluminium und Aluminiumlegierungen, welches geeignet ist, mechanisch hochfeste Verbindungen mit Reaktionsharzsystemen zu erzielen.

### Stand der Technik

Im Mittel- und Hochspannungsbereich werden polymere Isolationskomponenten mit metallischen Eingusselektroden verwendet. Der Stromträger besteht vorwiegend aus Aluminium, während der Isolationswerkstoff aus einem mit Mineralpulver gefüllten Epoxidharz besteht. Die Grenzfläche zwischen Aluminium und Epoxidharz wird mechanisch und elektrisch hoch belastet, deshalb ist für eine volle Funktionsfähigkeit sowohl im Kurzzeit- als auch im Langzeitverhalten eine hohe Haftfestigkeit des Epoxidharzes auf dem metallischen Grundkörper unabdingbare Voraussetzung.

Für die Erzielung hoher Haftfestigkeiten müssen zahlreiche Bedingungen erfüllt werden. Zum einen muss die Metalloberfläche mechanisch aufgerauht werden. Zur weiteren Verzahnung muss ausserdem eine hochporöse Oberflächenmorphologie erzeugt werden, die zusätzlich eine hohe chemische Affinität zum Reaktionsharz aufweisen muss.

Die mechanische Aufrauhung der Oberfläche ist bekannter Stand der Technik und erfolgt beispielsweise mittels Sandstrahlen, an das sich ein Entfetten anschliesst.

Für die Erzeugung der benötigten hochporösen Oberflächenschichten werden bisher elektrochemische Verfahren verwendet. Bekannt ist das Anodisieren in verschiedenen Säuren, z.B. in Phosphor-, Chrom- oder Schwefelsäure. Diese Verfahren haben den Nachteil, dass sie einerseits mit hohen Kosten verbunden sind und andererseits die Umwelt stark belasten und deshalb aus ökologischen Gründen unerwünscht sind.

In der Literatur sind Angaben zu finden über Oberflächenbehandlungen von Aluminium bzw. Aluminiumlegierungen mit Wasser im Hinblick auf Verbindungen zu polymeren Materialien, wie Thermoplasten und Duromeren. Als Beispiele werden genannt:
Arslanov, V.V.; Funke, W.: "The effect of water on the adhesion of organic coatings on aluminium", Prog. Org. Coatings 15, 1988 (4), S. 355-363,
Iwama, T.; Katsumata, K.; Takeuchi,Y.: "Effect of the method of hydration treatment on the adhesion of coating films to aluminium", J. Met. Finish. Soc. Jpn. 37, 1986 (9), S. 569-574,
Davies, R.J.: "The morphology and properties of aluminium oxides before and after exposure to water", Adhesion'87, Proceedings of the 3rd International Conference, York, 1987, S. G/1-G/5, 9(12)4,
McCarvil, W.T.; Bell, J.P.: "The effect of time and type of water pretreatment on bond strength of epoxy-aluminium joints", J. Appl. Polym. Sci., 18, 1974 (2), S. 335-342.

In diesen Schriften sind Untersuchungsergebnisse dargestellt, die sich auf Folien bzw. Schichtverbunde zwischen Aluminium bzw. Aluminiumlegierungen und Copolymeren auf der Basis von Polyethylen sowie Epoxidharzen beziehen. Die Hydratisierungen wurden bei Raumtemperatur in verschiedenen wässrigen Medien, z.B. Wasserglaslösungen durchgeführt. Allen Arbeiten gemeinsam ist die Bildung einer Hydratschicht mit einer charakteristischen Oberflächenmorphologie. Die Anwendungen erfolgten bei Raumtemperatur. Es wurde festgestellt, dass bei einer Hydratisierung bei Raumtemperatur mit zunehmender Hydratisierungszeit nach einer anfänglichen Reduktion der Haftfestigkeit diese danach ansteigt. Der Nachteil dieser bei Raumtemperatur hydratisierten Schichten besteht darin, dass sie bei erhöhten Temperaturen (>100°C) thermisch nicht stabil sind.

Aus S. Wernick und R. Pinner: "Die Oberflächenbehandlung von Aluminium", Eugen G. Lenze Verlag, Saalgau/Württ., Germany, 1969, S. 178-179 ist bekannt, dass auf Aluminiumoberflächen dichte Böhmit-Überzüge durch Kochen in destilliertem Wasser bei 75 bis 120 °C erzeugt werden können, wobei Verunreinigungen des Wassers die Filmbildung beeinträchtigen können.

In DE 43 03 339 C2 wird ein Verfahren zur Behandlung von Aluminiumdruckgussteilen vor dem Aufbringen eines porösen, katalytischen Überzuges beschrieben, mit dem die Haftungseigenschaften der Aluminiumdruckgussteile derart verbessert werden, dass offenporige anorganische Überzüge auch unter korrosiven Umgebungsbedingungen dauerhaft auf der Oberfläche anhaften. Nach einer Entfettung und Strahlbehandlung werden die Aluminiumdruckgussteile in entionisierten Wassser bei Temperaturen zwischen 90 und 100 °C im Zeitraum von 0,5 bis 1 Stunde mit einer 0,5 bis 1 µm dicken Böhmitschicht versehen.

Diese Verfahren zur Oberflächenbehandlung von Aluminium und seinen Legierungen sind nicht ausreichend, um hohe Haftfestigkeiten dieser metallischen Werkstoffe mit organischen Reaktionsharzsystemen auch bei erhöhten Temperaturen zu erreichen.

### Darstellung der Erfindung

Die Erfindung versucht, all diese Nachteile zu vermeiden. Ihr liegt die Aufgabe zugrunde, ein Verfahren zur Oberflächenbehandlung von Aluminium und Aluminiumlegierungen zu entwikkeln, welches geeignet ist, ohne komplexe mechanische und chemische Verfahrensschritte einen Oberflächenzustand zu erzeugen, mit dem hohe Haftfestigkeiten zu Reaktionsharzsystemen erzielt werden können, welche auch bei erhöhten Temperaturen stabil sind.

Erfindungsgemäss wird dies bei einem Verfahren gemäss Oberbegriff des Anspruchs 1 dadurch erreicht, dass das Aluminium bzw. die Aluminiumlegierungen im Anschluss an eine Hydratisierung in Wasser bei erhöhten Temperaturen einer Temperbehandlung unterzogen werden. Die optimalen Temperbehandlungsbedingungen , d.h. Dauer und maximale Temperatur, sind dabei vom verwendeten Werkstoff abhängig. Die Wärmebehandlungstemperatur und die Dauer der Wärmebehandlung müssen so gewählt werden, dass die mechanischen, physikalischen und elektrischen Eigenschaften des Aluminiums bzw. der Aluminiumlegierungen durch die Temperbehandlung nicht beeinträchtigt werden. Für Aluminium ist vorgesehen, die Wärmebehandlung bei einer Temperatur bis maximal 500 °C durchzuführen, bei Aluminiumlegierungen soll diese Temperatur erfindungsgemäss im Bereich der Ausscheidungshärtung der jeweiligen Temperatur liegen.

Die Vorteile der Erfindung bestehen darin, dass der für hohe Haftfestigkeiten geeignete Oberflächenzustand auf ökologisch unbedenkliche Weise erzeugt wird und dass das Verfahren wegen des Verzichts auf teure Chemikalien billig ist. Weiterhin kann der Zeitaufwand zur Erzeugung der notwendigen Oberflächenstrukturen gegenüber dem bekannten Stand der Technik verringert werden.

Es ist vorteilhaft, wenn die Hydratisierung in deionisiertem Wasser erfolgt.

Ausserdem ist es zweckmässig, wenn die Hydratisierungstemperatur 100°C beträgt, weil dann die Reaktivität für den Aufbau der Hydroxidschicht besonders hoch ist und die Hydratisierung bei dieser Temperatur einfach durchzuführen ist.

Es ist von Vorteil, wenn die Hydratisierung in Wasser mit einem Zusatz von Ammoniumhydroxid, vorzugsweise 0,1 Gew.% NH₄OH, erfolgt, weil dann die Dauer der Hydratisierung erheblich verkürzt werden kann.

Weiterhin ist es von Vorteil, die so vorbehandelten metallischen Substratoberflächen anschliessend in einer Lösung mit 0,01 bis 2,0 Gew.% einer metallorganischen Substanz, die als Haftvermittler wirkt, im Zeitraum von 0,25 bis 4 Stunden behandelt werden, wobei als metallorganische Substanz Silane, Titanate, Zirkonate oder Aluminate und als Lösungsmittel Wasser, Xylol, Toluol, aliphatische Kohlenwasserstoffe, chlorierte Kohlenwasserstoffe, aromatische Kohlenwasserstoffe, Ester, Ketone und Alkohole verwendet werden. Die reaktiven Gruppen der freien Liganden bilden über chemische Reaktionen kovalente Bindungen zum Reaktionsharzsystem aus und erhöhen somit nochmals die Haftfestigkeit zwischen dem Aluminium bzw. den Aluminiumlegierungen und den Reaktionsharzsystemen.

### Kurze Beschreibung der Zeichnung

In der Zeichnung sind mehrere Ausführungsbeispiele der Erfindung dargestellt.

Es zeigen:
- Fig. 1: eine schematische Darstellung der Grenzfläche Polymer-Metall;
- Fig. 2: die Oberfläche einer Al-Legierung im Raster-Elektronenmikroskop nach Temperung (Vorheizung) an Luft;
- Fig. 3: die Oberfläche einer Al-Legierung im Raster-Elektronenmikroskop wie Fig. 2, aber mit anschliessender Hydratisierung;
- Fig. 4: die Oberfläche einer Al-Legierung im Raster-Elekronenmikroskop wie Fig. 3, aber mit abschliessender Temperung;
- Fig. 5: eine Übersicht über die Haftfestigkeiten von Aluminium-Epoxy-Verbindungen in Abhängigkeit von der Oberflächenbehandlung des metallischen Substrates;
- Fig. 6: eine schematische Darstellung der erfindungsgemässen Oberflächeneffekte durch Verwendung von metallorganischen Haftvermittlern;
- Fig. 7: ein schematisches Reaktionsschema eines Haftvermittlers zwischen einem Metall und einem Epoxidharzsystem.

Es sind nur die für das Verständnis der Erfindung wesentlichen Elemente gezeigt.

### Weg zur Ausführung der Erfindung

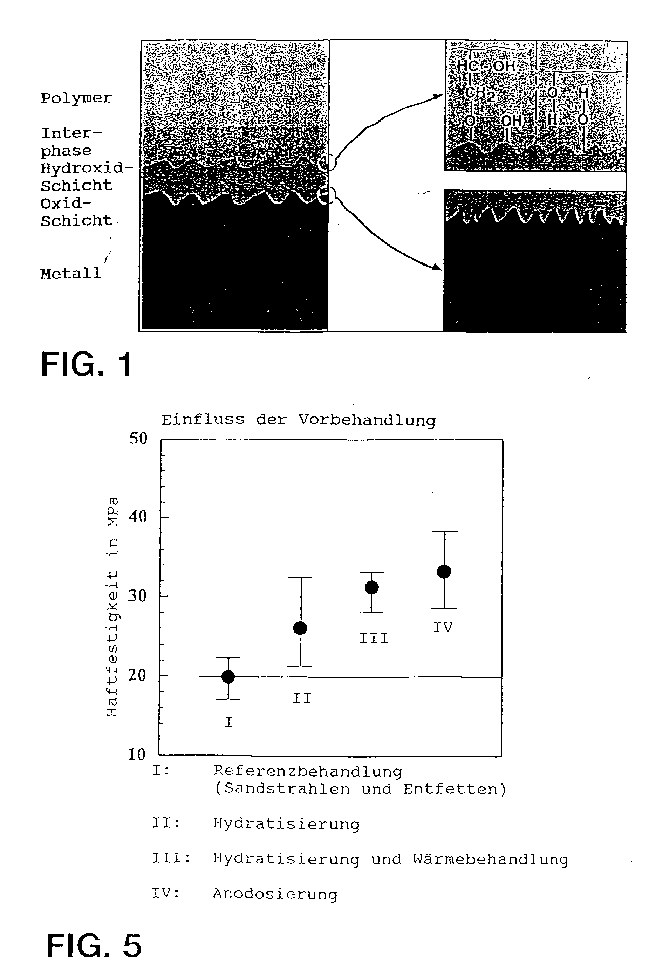

Nachfolgend wird die Erfindung anhand von Ausführungsbeispielen und der Fig. 1 bis 7 näher erläutert.

Fig. 1 zeigt schematisch die Grenzfläche einer Polymer-Metall-Verbindung. Die Metalloberfläche ist mechanisch aufgerauht, wie aus dem zackenförmigen Verlauf der Oberfläche hervorgeht. Das Metall weist unmittelbar an der Oberfläche eine dünne Oxidschicht auf, der eine Hydroxidschicht aufgelagert ist. Zwischen der Hydroxidschicht und dem Polymer hat sich eine Interphasenschicht ausgebildet, die einerseits durch echte chemische Bindungen, beispielsweise durch die Reaktion von Hydroxylgruppen auf der Al-Oberfläche mit Hydroxylgruppen auf dem Epoxidharz (unter Abspaltung von Wasser), andererseits durch die Bildung von sogenannten Nebenvalenz-Brükken, beispielsweise zwischen Wasserstoff und Sauerstoff ("Wasserstoffbrücken"), gekennzeichnet ist.

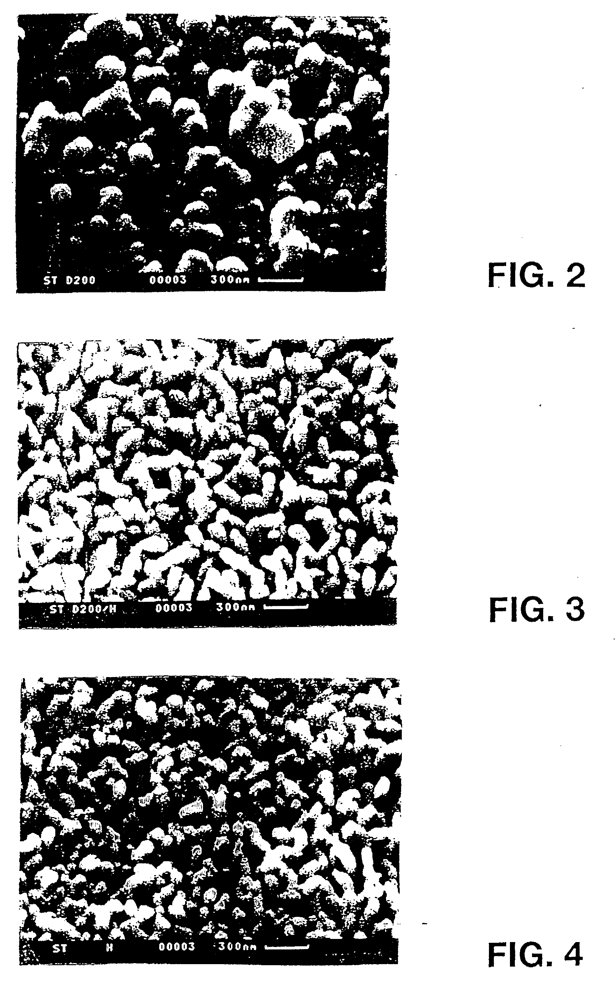

Ein konkretes Ausführungsbeispiel der Erfindung ist in den Fig. 2 bis 4 abgebildet.

Eine AlMgSi1-Legierung (1% Mg, 1% Si; Rest Al) soll mit einem mit Aluminiumoxidpulver gefüllten Epoxidharz mechanisch fest verbunden werden. Derartige Verbundsysteme werden in Mittel- und Hochspannungsanlagen als Isolationskomponenten mit Eingusselektroden verwendet.

Zunächst wird die Oberfläche der Aluminiumlegierung mittels Sandstrahlen mechanisch aufgerauht und entfettet. Anschliessend wird die Legierung bei 100°C mindestens 1 Stunde lang vorgeheizt.

Fig. 2 zeigt in einer Raster-Elektonenmikroskopaufnahme (45000-fache Vergrösserung) diese Oberfläche.

In einem weiteren Verfahrensschritt wird die so vorbehandelte vorgeheizte Al-Legierung einer Hydratisierung in deionisiertem Wasser bei 100°C unterzogen. Die Haltezeit im Wasser beträgt in diesem Ausführungsbeispiel 4 Stunden.

Fig. 3 zeigt in einer Raster-Elektronenenmikroskopaufnahme (45000-fache Vergrösserung) die hydratisierte Oberfläche. Auf der künstlich erzeugten amorphen Oxidschicht hat sich eine semikristalline Hydroxidschicht, sogenannter Pseudoböhmit, gebildet. Diese thermodynamisch metastabile Pseudoböhmitschicht zeichnet sich durch eine hohe Nanoporosität sowie durch oberflächenaktive Hydroxyl-Gruppen aus. In Fig. 3 ist deutlich die stengelartige, feinporöse Schicht zu erkennen.

Als abschliessender Verfahrensschritt vor der Verbindung der AlMgSi1-Legierung mit dem Epoxidharz erfolgt eine Wärmebehandlung der Legierung im Bereich der Ausscheidungshärtung dieser Legierung. Die AlMgSi1-Legierung wird bei diesem konkreten Ausführungsbeispiel bei 200°C 15 Stunden lang wärmebehandelt.

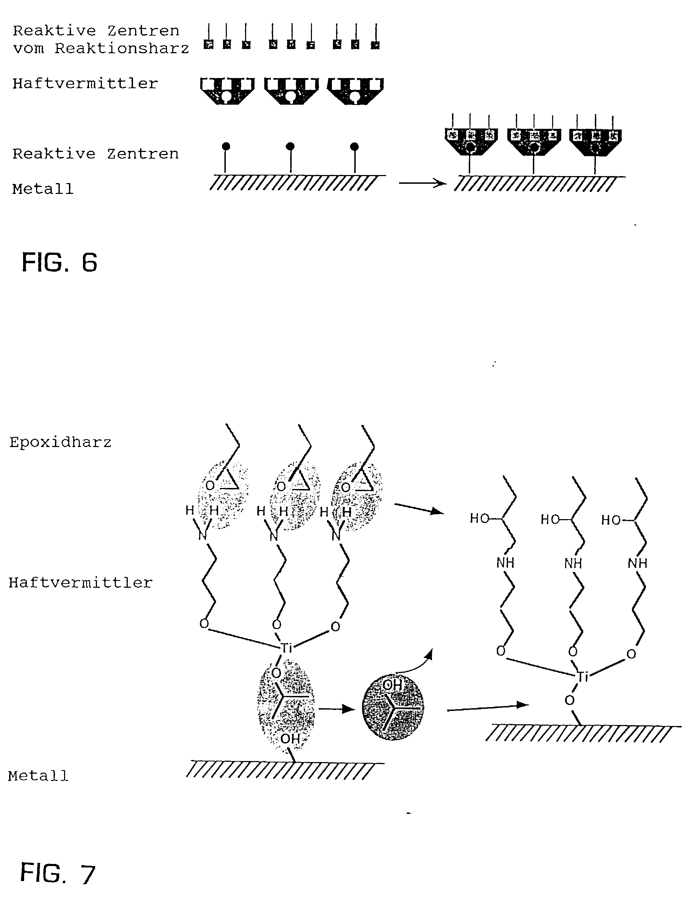

Fig. 4 zeigt die durch diese Wärmebehandlung entstandene Oberflächenstruktur in einer Raster-Elektronenmikroskopaufnahme (45000-fache Vergrösserung). Deutlich ist der weitere Anstieg der Oberflächenporosität im Vergleich zu Fig. 3 zu erkennen. Durch diese für das Verfahren entscheidende Temperbehandlung wird neben der verfeinerten Oberflächenstruktur auch ein thermodynamischer Gleichgewichtszustand der Pseudoböhmit-Phase erreicht, ohne dass die durch die Hydratisierung entstandene Oberflächenmorphologie zerstört wird.

Diese hochporöse Oberflächenschicht der Al-Legierung weist eine hohe chemische Affinität zu dem oben beschriebenen Epoxidharz auf. Die Verbindung dieser so behandelten Legierung mit dem mit Aluminiumoxidpulver gefüllten Epoxidharz, wobei das "Ummanteln" der Al-Legierung mit dem Epoxidharz bekannter Stand der Technik ist, zeichnet sich durch eine sehr hohe Haftfestigkeit aus.

In Fig. 5 sind die Haftzugfestigkeiten von AlMgSi1-Epoxy-Verbundsystemen in Abhängigkeit von der Oberflächenbehandlung der Al-Legierung dargestellt. Gegenüber der zur Zeit im Hoch- und Mittelspannungsbereich verwendeten Referenz-Methode (Sandstrahlen und Entfetten) kann schon allein durch die Hydratisierung in deionisiertem Wasser die Haftfestigkeit des Verbundsystems erhöht werden. Wird nach der Hydratisierung noch die oben beschriebene Temperbehandlung durchgeführt, dann kommt es zu einer Steigerung der Haftzugfestigkeit um mehr als 50% im Vergleich zum Zustand nach Sandstrahlen und Entfetten. Mit rund 31 MPa Haftzugfestigkeit zeigt diese Methode vergleichbare Werte wie wesentlich aufwendigere und teurere Methoden, z.B. Anodisieren in Chromsäure oder in Phosphorsäure.

Eine weitere Verbesserung des Verfahrens wird erreicht, wenn bei der Hydratisierung dem deionisiertem Wasser ein gewisser Anteil an Ammoniumhydroxid zugesetzt wird. Bei Zugabe von 0,1 Gew.% NH₄OH wird das "Zipfelwachstum" der Pseudoböhmitschicht bei einer Behandlungstemperatur von 100 °C bereits nach 30 s erreicht, so dass die Hydratisierungsdauer gegenüber dem oben beschriebenen Ausführungsbeispiel erheblich verringert werden kann.

Mit dem erfindungsgemässen Verfahren ist es ohne grossen Kostenmehraufwand möglich, hochfeste Aluminium-Epoxy-Verbindungen auf ökologisch unbedenklichem Wege herzustellen, um die Lebensdauer sowie Zuverlässigkeit von Isolationskomponenten in Mittel- und Hochspannungsanlagen zu verbessern.

Selbstverständlich ist die Erfindung nicht auf das eben beschriebenen Ausführungsbeispiel beschränkt. So werden im Flugzeugbau beispielsweise AlMgCu-Legierungen verwendet, die ebenfalls mit Reaktionsharzsystemen verbunden sind, wobei eine möglichst feste mechanische Verbindung zwischen diesen zwei Bestandteilen angestrebt wird. Auch für diese Verbundsysteme ist das erfindungsgemässe Verfahren anwendbar. Neben Epoxidharzen, die z.B. mit mineralischen, metallischen oder polymeren Füllstoffen versehen sein können, sind als Reaktionsharzsysteme auch Polyurethane, Phenolharze, Imid-basierte Harze, Cyanoacrylate, Acrylharze, anaerobe Klebstoffe oder Silikonharze verwendbar.

Ausserdem kann das erfindungsgemässe Verfahren auch zur Oberflächenbehandlung von Aluminium (Reinst- und Reinaluminium) eingesetzt werden. In diesem Falle wird nach der Hydratisierung des Metalls eine Wärmebehandlung bei Temperaturen im Bereich oberhalb der Raumtemperatur bis maximal 500 °C durchgeführt, was ebenfalls zu einer Verbesserung der Oberflächenmorphologie und damit zu einer besseren Haftfestigkeit des metallischen Substrates mit Reaktionsharzsystemen führt.

Die Hydratisierung kann in allen genannten Fällen, mit etwas grösserem apparativen Aufwand, auch bei höheren Temperaturen als 100°C, beispielsweise bei ca. 200°C im Autoklaven erfolgen. Ebenso ist eine Hydratisierung bei Temperaturen im Bereich von Raumtemperatur bis 100°C möglich, wobei die damit erzielbaren Effekte aber nicht so stark ausgeprägt sind.

In den Fig. 6 und 7 sind weitere Ausführungsbeispiele der Erfindung dargestellt. Um die Haftfestigkeit des metallischen Substrates mit einem Reaktionsharz noch weiter zu erhöhen, wird die Metalloberfläche, die wie oben beschrieben behandelt wurde und somit in einem chemisch aktiven Zustand vorliegt, zusätzlich mit einer metallorganischen Verbindung, die als Haftvermittler wirkt, appliziert. Als metallorganische Verbindungen eignen sich beispielsweise Silane, Titanate, Zirkonate und Aluminate. Diese Verbindungen weisen je nach chemischer Struktur bi- bzw. polyfunktionelle organische Liganden auf, die selektiv mit der vorbehandelten metallischen Oberfläche unter Bildung von kovalenten chemischen Bindungen reagieren. Dabei bildet sich an den Oberflächen eine monomolekulare organische Schicht aus. Bei Vorliegen einer hohen Affinität zu Reaktionsharzen reagieren die reaktiven Zentren des Reaktionsharzes mit dem Haftvermittler. Das ist schematisch in Fig. 6 dargestellt.

Durch Verwendung dieser "molekularen Brücken" bzw. "molekularen Multiplikatoren" können die Wechselwirkungs- bzw. Reaktionszentren des Aluminiums bzw. der Aluminiumlegierungen gegenüber von Reaktionsharzsystemen um ein Mehrfaches erhöht werden.

Fig. 7 zeigt dazu ein Ausführungsbeispiel. Dort ist schematisch das Reaktionsschema eines Titanates als Haftvermittler zwischen dem Metall, hier Aluminium bzw. eine Aluminiumlegierung, und einem Epoxidharzsystem dargestellt. Der metallische Werkstoff wird zunächst mechanisch aufgerauht, entfettet, anschliessend vorzugsweise in deionisiertem Wasser bei 100 °C hydratisiert und bei Temperaturen, die für die Aluminiumlegierungen im Bereich der Ausscheidungshärtung liegen und für Aluminium maximal 500 °C betragen, wärmebehandelt. Insoweit stimmen diese Verfahrensschritte mit dem oben beschriebenen Ausführungsbeispiel überein. Die metallischen Substrate erhalten durch diese Behandlung eine hochporöse Oberflächenmorphologie, die zusätzlich eine hohe chemische Affinität zu metallorganischen Verbindungen aufweist. Die so vorbehandelten metallischen Substratoberflächen werden nun zwischen 0,25 und 4 Stunden in einer Lösung mit 0,01 bis 2,0 Gew.% metallorganischer Substanz behandelt. Als Lösungsmittel können Wasser, Xylol, Toluol, aliphatische, chlorierte bzw. aromatische Kohlenwasserstoffe, Ester, Ketone und Alkohle verwendet werden. Die Behandlungstemperatur ist abhängig vom eingesetzten Lösungsmittel und schwankt zwischen 20 und 90°C.

Vor der Verklebung der metallischen Teile mit dem Reaktionsharz werden die beschichteten Oberflächen mit sauberem Lösungsmittel gewaschen und für die Verklebung vorbereitet. Die reaktiven Gruppen der "freien" Liganden bilden kovalente Bindungen zum Reaktionsharzsystem aus und erhöhen die Haftfestigkeit erheblich.

In der nachfolgenden Tabelle sind als Beispiel die Stirnzugfestigkeiten zwischen der Legierung AlMgSil und Epoxidharz für verschiedene Haftvermittler (Titanate) dargestellt. Die Behandlungsparameter für die Al-Legierung waren bis auf die Wahl der konkreten metallorganischen Substanz in allen Fällen gleich:
a) Entfetten
b) Sandstrahlen
c) 1 h Wärmebehandlung bei 100 °C
d) Hydratisierung in deionisiertem Wasser bei 100 °C (4 h)
e) 15 h Wärmebehandlung bei 200 °C
f) Behandlung in einer Lösung mit 0,5 Gew.% metallorganischer Substanz (Lösungsmittel: Isopropanol, Behandlungstemperatur 50 °C, Dauer: 4 h)
g) Waschen mit sauberem Lösungsmittel (Isopropanol).
Anschliessend erfolgt die Verklebung des metallischen Teiles mit dem Epoxidharz.

Die höchsten Haftfestigkeiten werden bei Verwendung eines Titanates erreicht, das eine Strukturformel aufweist wie in der letzten Zeile der Tabelle.

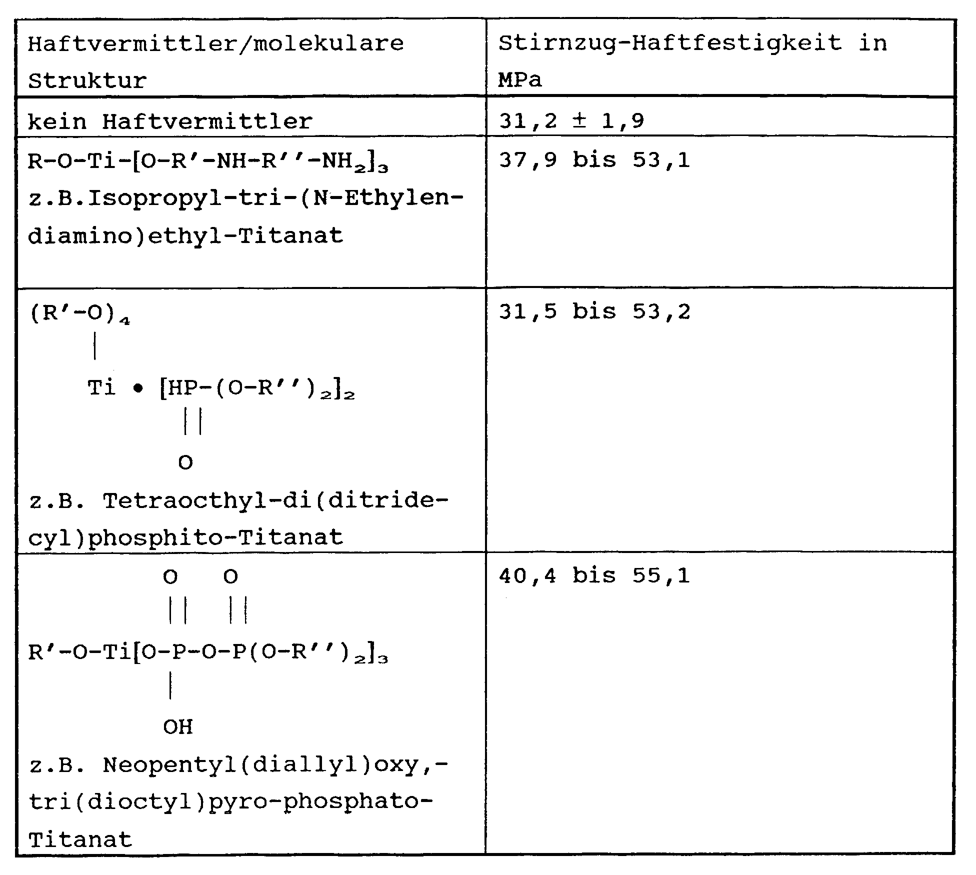

## Patentansprüche

1. Verfahren zur Oberflächenbehandlung von Aluminium und Aluminiumlegierungen für mechanisch hochfeste Verbindungen mit Reaktionsharzsystemen, wobei die Metall- bzw. Legierungsoberfläche zunächst mechanisch aufgerauht und entfettet wird und nachfolgend das Aluminium bzw. die Aluminiumlegierungen in Wasser bei Temperaturen oberhalb der Raumtemperatur hydratisiert werden, dadurch gekennzeichnet, dass nach der Hydratisierung eine Temperbehandlung durchgeführt wird, wobei das Aluminium bei Temperaturen oberhalb Raumtemperatur bis maximal 500 °C und die Aluminiumlegierungen bei Temperaturen im Bereich der Ausscheidungshärtung der jeweiligen Aluminiumlegierung wärmebehandelt werden.

2. Verfahren nach Anspruch 1, dadurch gekennzeichnet, dass die Hydratisierung in deionisiertem Wasser durchgeführt wird.

3. Verfahren nach Anspruch 1 oder 2, dadurch gekennzeichnet, dass die Hydratisierung im Temperaturbereich oberhalb von Raumtemperatur bis 200 °C durchgeführt wird.

4. Verfahren nach Anspruch 3, dadurch gekennzeichnet, dass die Hydratisierung bei einer Temperatur von 100°C durchgeführt wird.

5. Verfahren nach einem der Ansprüche 1 bis 4, dadurch gekennzeichnet, dass dem Wasser Ammoniumhydroxid zugegeben wird.

6. Verfahren nach Anspruch 5, dadurch gekennzeichnet, dass der Anteil an Ammoniumhydroxid 0,1 Gew.% beträgt.

7. Verfahren nach einem der Ansprüche 1 bis 6, dadurch gekennzeichnet, dass die so vorbehandelten metallischen Substratoberflächen anschliessend in einer Lösung mit 0,01 bis 2,0 Gew.% einer metallorganischen Substanz im Zeitraum von 0,25 bis 4 Stunden behandelt werden.

8. Verfahren nach Anspruch 7, dadurch gekennzeichnet, dass als metallorganische Substanz Silane, Titanate, Zirkonate oder Aluminate verwendet werden.

9. Verfahren nach Anspruch 8, dadurch gekennzeichnet, dass als Lösungsmittel Wasser, Xylol, Toluol, aliphatische Kohlenwasserstoffe, chlorierte Kohlenwasserstoffe, aromatische Kohlenwasserstoffe, Ester, Ketone und Alkohole verwendet werden.

## Claims

1. Process for surface treating aluminium and its alloys for mechanically high-strength joins to reactive-resin systems, in which the metal or alloy surface is first mechanically roughened and degreased and then the aluminium or its alloy is hydrated in water at temperatures above room temperature, characterized in that hydration is followed by a tempering treatment, the aluminium being heat-treated at temperatures above room temperature up to a maximum of 500°C and the aluminium alloys being heat-treated at temperatures in the range of the precipitation hardening of the respective aluminium alloy.

2. Process according to Claim 1, characterized in that hydration is carried out in deionized water.

3. Process according to Claim 1 or 2, characterized in that hydration is carried out in the temperature range from above room temperature up to 200°C.

4. Process according to Claim 3, characterized in that hydration is carried out at a temperature of 100°C.

5. Process according to one of Claims 1 to 4, characterized in that ammonium hydroxide is added to the water.

6. Process according to Claim 5, characterized in that the proportion of ammonium hydroxide is 0.1% by weight.

7. Process according to one of Claims 1 to 6, characterized in that the metallic substrate surfaces pretreated in this way are subsequently treated in a solution with from 0.01 to 2.0% by weight of an organometallic substance over a period of from 0.25 to 4 hours.

8. Process according to Claim 7, characterized in that silanes, titanates, zirconates or aluminates are used as organometallic substance.

9. Process according to Claim 8, characterized in that water, xylene, toluene, aliphatic hydrocarbons, chlorinated hydrocarbons, aromatic hydrocarbons, esters, ketones and alcohols are used as solvent.

## Revendications

1. Procédé de traitement de surfaces en aluminium et en alliages d'aluminium pour des composés à résistance mécanique élevée avec des systèmes de résines composites, dans lequel la surface métallique ou, selon le cas, en alliage est d'abord mécaniquement rendue rugueuse et dégraissée puis l'aluminium ou, selon le cas, les alliages d'aluminium sont hydratés dans de l'eau à des températures supérieures à la température ambiante, caractérisé en ce que l'on réalise après l'hydratation un traitement par trempe dans lequel l'aluminium est traité thermiquement à des températures supérieures à la température ambiante jusqu'à 500°C au maximum et les alliages d'aluminium sont traités thermiquement à des températures dans l'intervalle du durcissement par précipitation de l'alliage d'aluminium respectif.

2. Procédé suivant la revendication 1, caractérisé en ce que l'hydratation est réalisée dans de l'eau désionisée.

3. Procédé suivant la revendication 1 ou 2, caractérisé en ce que l'hydratation est réalisée dans un intervalle de températures supérieur à la température ambiante jusqu'à 200°C.

4. Procédé suivant la revendication 3, caractérisé en ce que l'hydratation est réalisée à une température de 100°C.

5. Procédé suivant l'une des revendications 1 à 4, caractérisé en ce que l'on ajoute de l'hydroxyde d'ammonium à l'eau.

6. Procédé suivant la revendication 5, caractérisé en ce que la proportion d'hydroxyde d'ammonium est de 0,1% en poids.

7. Procédé suivant l'une des revendications 1 à 6, caractérisé en ce que les surfaces de substrat métalliques ainsi prétraitées sont ensuite traitées dans une solution avec 0,01 à 2,0% en poids d'une substance organométallique en une période de 0,25 à 4 heures.

8. Procédé suivant la revendication 7, caractérisé en ce qu'on utilise, en tant que substance organométallique, des silanes, des titanates, des zirconates ou des aluminates.

9. Procédé suivant la revendication 8, caractérisé en ce qu'on utilise, en tant que solvant, de l'eau, du xylène, du toluène, des hydrocarbures aliphatiques, des hydrocarbures chlorés, des hydrocarbures aromatiques, des esters, des cétones et des alcools.
